# EUROPÄISCHE PATENTSCHRIFT

(11) **EP 0 884 821 B1**
(45) Veröffentlichungstag und Bekanntmachung des Hinweises auf die Patenterteilung: **30.05.2007**
(21) Anmeldenummer: 97109623.5
(22) Anmeldetag: 13.06.1997
(51) Int. Cl.: H02J 9/00

(54) **Anordnung zur Energieverteilung, insbesondere in einem Flugzeug**
Arrangement for power distribution, in particular for an aircraft
Système de distribution d'énergie, en particulier pour un aéronef

(43) Veröffentlichungstag der Anmeldung: 16.12.1998
(73) Patentinhaber: Airbus Deutschland GmbH, 21129 Hamburg (DE)
(72) Erfinder: Weiler, Werner, Ing. grad., 31358 Colomiers (FR); Krumbholz, Michael, Dipl.-Ing., 25358 Horst (DE)
(74) Vertreter: Hansmann, Dierk

(56) Entgegenhaltungen:
- GB-A- 2 290 424
- J.H. ENTHOVEN ET AL: "Software Design for Fault Tolerant Electrical Power System " IEEE 1987 NATIONAL AEROSPACE AND ELECTRONICS CONFERENCE PROCEEDINGS, Bd. 4, 18. - 22.Mai 1987, DAYTON, USA, Seiten 1475-1482, XP002046009
- SHI F ET AL: "FAULT TOLERANT DISTRIBUTED POWER" APEC '96. ELEVENTH ANNUAL APPLIED POWER ELECTRONICS CONFERENCE AND EXPOSITION, SAN JOSE, MAR. 3 - 7, 1996, Bd. 2, 3.März 1996, INSTITUTE OF ELECTRICAL AND ELECTRONICS ENGINEERS, Seiten 671-677, XP000585912
- W. R. OWENS ET AL : "Conceptual Design of an Advanced Aircraft Electrical System (AAES) " IEEE 1987 NATIONAL AEROSPACE AND ELECTRONICS CONFERENCE PROCEEDINGS, Bd. 2, 18. - 22.Mai 1987, DAYTON, USA, Seiten 441-445, XP002046010

## Beschreibung

Die Erfindung betrifft eine Anordnung zur Energieverteilung in einem Flugzeug mit einer Energieleitung bestehend aus mehreren einzelnen Versorgungssträngen, wobei im Zuge der Energieleitung mindestens ein Verteiler angeordnet ist, an den jeweils eine Verbrauchergruppe über eine. Stichleitung und einen Leistungsschalter angeschlossen ist, und wobei die Verbraucher jeder Verbrauchergruppe gemäß einer vorgegebenen Konfiguration von Zuordnungen mit den Versorgungssträngen verbunden sind.

Mittels derartiger Anordnungen wird die in einem Flugzeug innerhalb des Energieversorgungssystems verfügbare elektrische Energie auf die einzelnen Verbraucher verteilt. Dabei stehen aus Sicherheitsgründen mehrere Energiequellen zur Verfügung, denen die Verbraucher über die verzweigte Verkabelung des Energieversorgungssystems nach einer allgemein üblichen Verfahrensweise fest zugeordnet sind. Wenn hierbei ein Energiezweig ausfällt, dann ist die Energieversorgung aller Verbraucher unterbrochen, die an diesen Zweig angeschlossen sind. Dabei kann es vorkommen, dass Verbraucher von der Versorgung abgetrennt werden, obwohl die verbleibende Energie durch die angeschlossenen Verbraucher nicht voll ausgenutzt wird oder ein wichtiger Verbraucher ausfällt, wohingegen ein relativ unwichtiger Verbraucher weiterhin mit Energie versorgt wird.

In der Druckschrift von John H. Enthoven et al "Software Design for Fault Tolerant Electrical Power System" IEEE 1987 National Aerospace and Electronics Conference Proceedings, Bd. 4, 18 Mai 1987 (1987-05-18) - 22. Mai 1987 (1987-05-22), Seiten 1475-1482 XP 002046009 Dayton, USA ist ein fehlertolerantes elektrisches Energie - Erzeugungssystem für Kampfflugzeuge beschrieben. Die zu-gehörige Software für das-Energiesystem schließt ausreichende Redundanz- und Integrationsebenen ein, um ein hoch zuverlässiges elektrisches System für flugkritische Lasten zu schaffen. Das System erlaubt es, Lasten, die mit einem überlasteten Generatorkanal verbunden sind, auf einen anderen betriebsbereiten Generatorkanal zu übertragen, ohne dass die bestehenden Lasten abgeschaltet werden.

Aus der Druckschrift von Shi et al "Fault Tolerant Distributed Power" Apec '96; Eleventh Annual Applied Power Electronics Conference and Exposition, San Jose, Mar. 3-7, 1996, Bd. 2, 3.März 1996 (1996-03-03), Seiten 671 - 677, XP 000585912 Institute of Electrical and Electronics Engineers sind Anordnungen zur Energieverteilung in Flugzeugen bekannt, bei denen es sich um fehlertolerante Versorgungssysteme handelt. Diese Systeme können beispielsweise Fehler an zwei von drei Leitungsbusen oder an zwei von drei Leistungseingängen der Flugkontrollrechner tolerieren und beruhen auf dem Prinzip der Redundanz.

In der Druckschrift von William R. Owens et al "Conceptual Design of an Advanced Aircraft Electrical System (AAES)" IEEE 1987 National Aerospace and Electronics Conference Proceedings, Bd. 2, 18 Mai 1987 (1987-05-18) - 22. Mai 1987 (1987-05-22), Seiten 441 - 445, XP 002046010 Dayton, USA sind elektrische Versorgungssysteme für Flugzeuge beschrieben, die alle nach dem Redundanzprinzip arbeiten. So zeigt das auf Seite 449 dargestellte System eine Reihe von LMC's (load management center) mit jeweils drei Versorgungseingängen, die an jeweils drei von vier Versorgungsleitungen angeschlossen sind. Auf jeder Phase werden Wandler zur Überwachung der Ströme zueinander verwendet, um offene Schaltkreis-Misserfolge auf einer Phase oder um Stromdifferenzen an jedem Versorger individuell zu erfassen und somit einen Versorgerfehler zu lokalisieren. Jede LMC kann elektrische Leistung über einen seiner Versorgungseingänge nur von drei der vier Versorgungsleiturigen beziehen. Hierbei sind die flugkritischen Lasten aus Redundanzgründen mit jeweils zwei LMC's verbunden.

Aus der GB-A-2 290 424 ist ein Energieversorgungssystem für ein hydraulisches System in einem Flugzeug ersichtlich, welches u.a. einen Prozessor und einen Energiemonitor aufweist. Der Prozessor ermittelt, wann die durch die Pumpen des Hydrauliksystems verbrauchte Leistung die von einem Wechselstromgenerator erzeugte Kapazität überschreitet. Wird eine Überlastung detektiert, so werden Lasten mit niedriger Priorität abgeschaltet. Die Software des Prozessors regelt eine gestaffelte erneute Verbindung aller Lasten, wenn die Energie-Kapazität wieder ausreichend ist. Es können dann alle Lasten wieder zusammen verbunden werden.

Der Erfindung liegt die Aufgabe zugrunde, eine gattungsgemäße Anordnung so auszubilden, dass die Zuordnung der Verbraucher zu den einzelnen Zweigen des Energieversorgungssystems aufgrund vorbestimmter Regeln während des Betriebes veränderbar ist, wobei Verbraucher mit einer niedrigen Priorität nur dann abgeschaltet werden, wenn die Gesamtleistung nicht ausreicht.

Die Aufgabe wird bei einer gattungsgemäßen Anordnung dadurch gelöst, dass
- für jede Verbrauchergruppe eine Zuordnungseinheit vorgesehen ist, der mittels eines Datenbuses eine Energiekontrolleinheit vorgeschaltet ist,
- jede Zuordnungseinheit eine Empfangsstufe mit nach geordneter Zuordnungssteuereinheit zur Erzeugung von Schaltbefehlen für den Leistungsschalter aufweist, an den die Verbraucher einer jeden Verbrauchergruppe angeschlossen sind,
- die zentrale Energiekontrolleinheit eine Standardmatrix mit abgespeicherten Zuordnungsbefehlen und eine nach geschaltete Prioritätsmatrix mit einer abgespeicherten, die Verbraucher nach ihrer Priorität ordnenden Liste aufweist, wobei die Prioritätsmatrix von einer Energie - Statuseinheit über eine Leitung Daten über den Zustand der Energieleitung erhält und wobei der Prioritätsmatrix ein Auswahlprozessor zur rechnerischen Ermittlung der Belastbarkeit einzelner Stromerzeugerkreise und zur Festlegung entsprechender Grenzwerte zwecks Speisung einer Sendeeinheit nachgeordnet ist, und dass
- die zentrale Energiekontrolleinheit zur Verarbeitung von Störungsinformationen über den Datenbus zur Übertragung von Steuerbefehlen mit jeder Zuordnungseinheit derart zusammenwirkt, dass aufgrund der Störungsinformationen die vom Ausfall eines Versorgungsstranges betroffenen Verbraucher gemäß ihrer durch die Prioritätsmatrix vorgegebenen Priorität automatisch an noch intakte Versorgungsstränge angeschlossen werden.

Dabei ist von besonderem Vorteil, dass die Energieversorgung wichtiger Verbraucher trotz Ausfalls beliebiger Energieversorgungszweige weitgehend sichergestellt ist.

Vorteilhafte Weiterbildungen der Erfindung sind in den Unteransprüchen angegeben.

Die Erfindung ist anhand der Zeichnung dargestellt und nachfolgend näher erläutert. Es zeigen
- Fig. 1: ein Blockschaltbild einer Anordnung zur Energieverteilung mit einer Energiesteuerungseinheit und mehreren Zuordnungseinheiten,
- Fig. 2: interne Einzelheiten der Energiesteuerungseinheit und einer der Zuordnungseinheiten nach Fig.1 und
- Fig. 3: eine Zuordnungseinheit mit einer integrierten Statuseinheit.

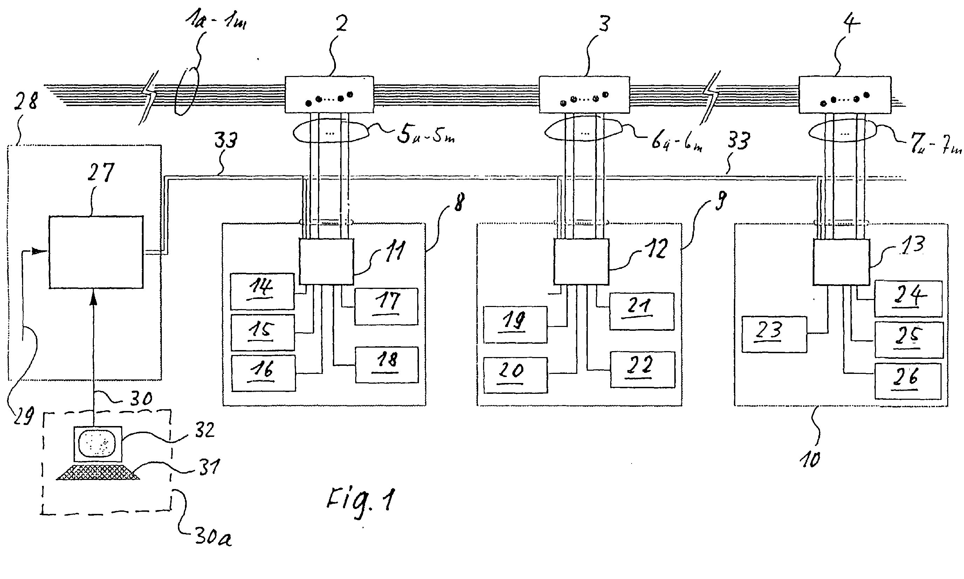

In Figur 1 wird eine entsprechende Anordnung zur Energieverteilung in einem Flugzeug am Beispiel der Stromversorgung für die Bordküchen dargestellt. Das Bild zeigt eine Anordnung mit einer Energieleitung 1, bestehend aus mehreren einzelnen Versorgungssträngen 1a bis 1n, wobei im Zuge der Energieleitung 1 mehrere Verteiler 2, 3 und 4 angeordnet sind, an die jeweils über eine Stichleitung 5, 6 und 7 eine Verbrauchergruppe 8, 9 und 10 angeschlossen ist. Innerhalb einer jeden Verbrauchergruppe 8,9,10 ist eine Zuordnungseinheit 11, 12 und 13 vorgesehen, die einerseits über die Stichleitungen 5, 6,7 mit den Versorgungssträngen 1a bis 1n der Energieleitung 1 und andererseits mit den einzelnen Verbrauchern der jeweiligen Verbrauchergruppe in Verbindung steht. Jede Verbrauchergruppe umfaßt die im Bereich einer Bordküche angeordneten Verbraucher. So schließt die Verbrauchergruppe 8 beispielsweise die im Bereich einer ersten Bordküche angeordneten Verbraucher ein, nämlich einen Ofen 14, einen Boiler 15, eine Kühlbox 16 sowie zwei weitere Öfen 17 und 18. In entsprechender Weise umfaßt die Verbrauchergruppe 9 den Bereich einer zweiten Bordküche mit einem Boiler 19, zwei Öfen 20 und 21 sowie einer Kühlbox 22. Die Verbrauchergruppe 10 umfaßt schließlich einen Boiler 23 und drei Öfen 24 bis 26. Zur Steuerung des Betriebsablaufes ist eine zentrale Energiekontrolleinheit 27 vorgesehen, die beispielsweise in einem Elektronikraum 28 angeordnet ist. An die Energiekontrolleinheit 27 ist eine Datenleitung 29 und eine Eingabeleitung 30 angeschlossen. Die Datenleitung 29 dient zur Eingabe automatisch erfaßter Informationen über den Zustand der Energieleitung 1. Die Eingabeleitung 30 verbindent die Energiekontrolleinheit 27 mit einer Eingabeeinheit 30a zur manuellen Eingabe von Konfigurationsdaten, die im wesentlichen aus einer Tastatur 31 und einem Bildschirm 32 besteht. Ausgangsseitig ist die Energiekontrolleinheit 27 über einen bidirektionalen Steuerbus 33 mit den Zuordnungseinheiten 11 bis 13 verbunden.

Während des Betriebes sind die einzelnen Verbraucher einer Verbrauchergruppe 8,9,10 über die entsprechende Zuordnungseinheit 11,12,13 gemäß einer vorher festgelegten Konfiguration von Zuordnungen mit bestimmten Versorgungssträngen der Energieleitung 1 verbunden, was mittels digital ansteuerbarer individueller Leistungsschalter realisiert wird. Die betreffende Konfiguration ist innerhalb der Energiekontrolleinheit 27 abgespeichert und kann anhand der Tastatur 31 geändert werden. Hierdurch wird erreicht, daß eine Änderung der Zuordnungen der Verbraucher zu den einzelnen Versorgungssträngen nicht mehr wie bisher durch eine Änderung der Installation sondern nur noch per Befehlseingabe durchgeführt wird. Eine Neukonfiguration erfolgt aufgrund der Erfindung automatisch je nach Zustand des Versorgungssystems.

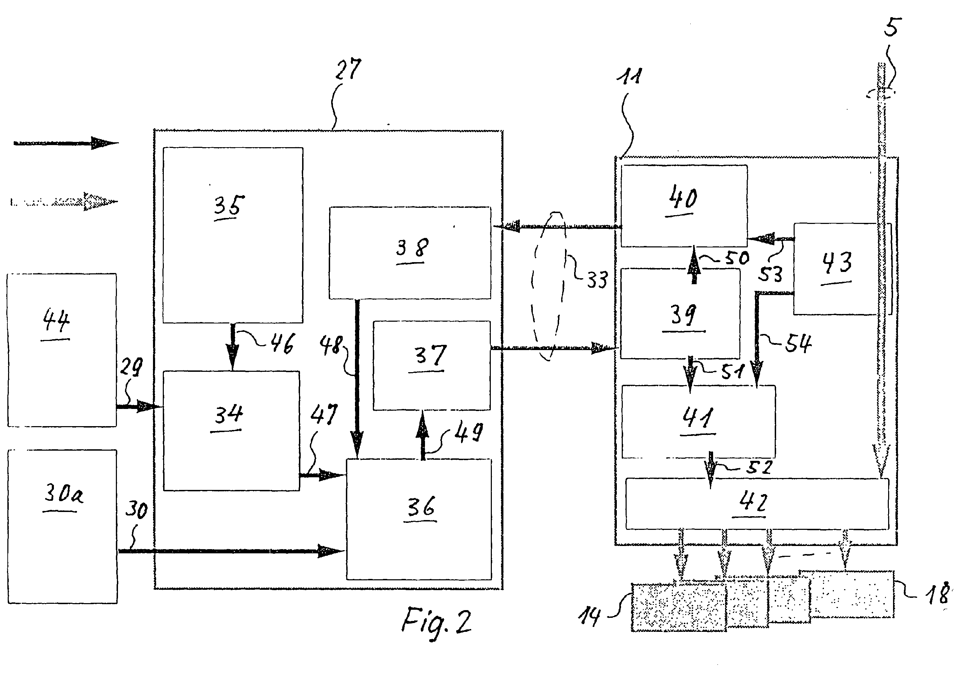

Figur 2 zeigt die interne Schaltung der Energiesteuerungseinheit 27 und der Zuordnungseinheit 11 nach Fig.1 innerhalb der Anordnung zur Energieverteilung. Die Energiesteuerungseinheit 27 übernimmt in der Gesamtanordnung eine zentrale Steuerfunktion und umfaßt eine Prioritätsmatrix 34, im folgenden kurz Priomatrix genannt, eine Standardmatrix 35, einen Auswahlprozessor 36, eine Sende-Einheit 37 und eine Last-Rückmelde-Einheit 38. Die Priomatrix 34 enthält eine Liste, in der die Verbraucher nach ihrer Priorität geordnet sind und ist eingangsseitig über die Datenleitung 29 mit einer Statuseinheit 44 und über eine Datenleitung 46 mit der Standardmatrix 35 verbunden. Ausgangsseitig steht die Priomatrix 34 über eine Leitung 47 mit dem Auswahlprozessor 36, in Verbindung. Weiterhin erhält der Auswahlprozessor 36 Informationen über eine Leitung 48 von der Last-Rückmelde-Einheit 38. Die Ausgangssignale des Auswahlprozessors 36 gelangen über eine Leitung 49 in die Sende-Einheit 37, die ihrerseits digitale Signale über den Datenbus 33 an die Zuordnungseinheiten 11 bis 13 weiterleitet.

Die Zuordnungseinheit 11 umfaßt eine mit dem Datenbus 33 verbundene Empfangsstufe 39, einen Lastmonitor 40, eine Zuordnungssteuereinheit 41, einen Leistungsschalter 42 und einen Lastsensor 43. Die Empfangsstufe 39 leitet die empfangenen Informationen und Befehle an den Lastmonitor 40 bzw. an die Zuordnungssteuereinheit 41 über interne Leitungen 50 bzw. 51 weiter. Die Zuordnungssteuereinheit 41 steht ihrerseits über eine Datenleitung 52 mit dem Leistungsschalter 42 in Verbindung, dessen Ausgänge mit den einzelnen Verbrauchern 14 bis 18 verbunden sind. Die Stichleitung 5 ist mit den Versorgungssträngen 5a bis 5n zum Leistungsschalter 42 geführt und passiert den Lastsensor 43. Ausgangsseitig steht der Lastsensor 43 über eine Leitung 53 mit dem Lastmonitor 40 und über eine Leitung 54 mit der Zuordnungssteuereinheit 41 in Verbindung.

Wird die Anordnung im Normalfall, das heißt bei störungsfreien Systemen, in Betrieb gesetzt, so erfolgt die Energieversorgung der einzelnen Verbraucher entsprechend der in der Standardmatrix abgespeicherten Zuordnungsbefehle. Diese Befehle betreffen diejenige Zuordnung der Verbraucher, die für einen Betrieb mit störungsfreien Energie-Erzeugungssystemen optimal ist. Hierzu laufen innerhalb der Energiesteuerungseinheit 27 folgende Funktionen ab. Die in der Standardmatrix 35 abgespeicherte Zuordnung wird in digitaler Form an die Priomatrix 34 weitergeleitet, in der auch die von der Energie-Statuseinheit 44 gelieferten Informationen vorliegen. Aufgrund einer integrierten Logik wird geprüft, ob die Statuseinheit 44 einen intakten Betrieb der Energieerzeugung meldet. Ist dies der Fall, so liefert die Priomatrix 34 an den Auswahlprozessor 36 entsprechende Signale, die den Befehl enthalten, bei den weiter ablaufenden Operationen die in der Standardmatrix vorliegenden Zuordnungen zu berücksichtigen. Der Auswahlprozessor 36 prüft seinerseits, ob über die Leitung 30 manuell eingegebene Zuordnungsbefehle vorliegen. Ist dies nicht der Fall, gibt der Auswahlprozessor 36 den von der Priomatrix 34 erhaltene Befehl praktisch in unveränderter Form an die Sende-Einheit 37 weiter. Der Auswahlprozessor hat außerdem die Funktion, die Belastbarkeit der einzelnen Stromerzeugerkreise rechnerisch zu ermitteln und entsprechende Grenzwerte festzulegen. Die Sende-Einheit 37 speist die betreffenden vom Auswahlprozessor 36 gelieferten Signale in den Datenbus 33 ein, nachdem sie in das für diesen Bus kompatible digitale Format umgesetzt wurden. Da mehrere Zuordnungseinheiten 11 bis 13 an den Datenbus angeschlossen sind, wird jede dieser Einheiten von der Sende-Einheit 37 gezielt adressiert und mit individuellen Zuordnungsbefehlen versehen.

Seitens einer Zuordnungseinheit, beispielsweise der mit 11 bezeichneten, ergibt sich nach Eintreffen eines Signals über den Datenbus 33 folgender Funktionsablauf. Das Signal gelangt vom Bus 33 in die Empfangsstufe 39 und wird hier für den Lastmonitor 40 aufbereitet und an diesen weitergeleitet. Gleichzeitig erfolgt eine entsprechende Weiterleitung von Signalen an die Zuordnungssteuereinheit 41, in der aufgrund der betreffenden eingehenden Signale konkrete Schaltbefehle für den Leistungsschalter 42 erzeugt werden. Diese Schaltbefehle führen im Falle ihrer Ausführung zu eben der Zuordnung der Verbraucher zu den Strängen der Stichleitung 5, die innerhalb der Standardmatrix 35 für die an die Zuordnungseinheit 11 angeschlossenen Verbraucher 14 bis 18 abgespeichert ist. Während des Betriebes wird die konkret vorliegende individuelle Belastung eines jeden Versorgungsstranges der Stichleitung 5 durch den Lastsensor 43 gemessen und die Meßwerte sowohl dem Lastmonitor 40 als auch der Zuordnungssteuereinheit 41 mitgeteilt. Der Lastmonitor 40 bereitet die Meßwerte für den Datenbus 33 auf und leitet sie über diesen zurück an die Last-Rückmelde-Einheit 38. Die Zuordnungseinheit 41 vergleicht die von der Empfangsstufe 39 erhaltenen Werte mit den vom Lastsensor 43 gelieferten und berücksichtigt diese bei der Erzeugung der Schaltbefehle für den Leistungsschalter 42. Liegen die vom Lastsensor 43 gemessenen Werte innerhalb des jeweils zulässigen Rahmens, so werden die von der Standardmatrix 35 gelieferten Zuordnungen zur Realisierung freigegeben.

Die vorbeschriebene Anordnung ist in der Lage, auf Störungen logisch zu reagieren und durch Energieausfall verursachte Geräteausfälle weitgehend zu vermeiden. Wenn beispielsweise die von der Statuseinheit 44 gelieferten Signale die Information enthalten, daß ein Energieversorgungskreis ausgefallen ist, so ermittelt der Auswahlprozessor 36 eine neue Zuordnung derart, daß alle von dem Ausfall betroffenen Verbraucher unter Beachtung der entsprechenden Grenzwerte auf die intakten Versorgungskreise aufgeteilt werden. In diesem Falle wird die in der Standardmatrix abgespeicherte Zuordnung durch die vom Auswahlprozessor 36 ermittelte ersetzt.

Ergibt die Berechnung des Auswahlprozessors 36, daß die nach einem Ausfall eines Energieversorgungskreises verbleibende Gesamtleistung der intakten Versorgungskreise zur ordnungsgemäßen Versorgung aller angeschlossenen Verbraucher nicht ausreicht, so wird der Verbraucher mit der gemäß Priomatrix 34 niedrigsten Priorität abgeschaltet.

Sollte die zentrale Steuereinheit 27 aufgrund einer Störung ausfallen, so wird der Betrieb aufgrund einer jeweils in die betreffende Zuordnungseinheit 11 bis 13 integrierten Logik auf dezentraler Grundlage weitergeführt. Dies wird dadurch erreicht, daß innerhalb der einzelnen Zuordnungseinheiten 41 alle von der Steuereinheit 27 gelieferten Daten, insbesondere des Auswahlprozessors 36, abgespeichert werden, so daß sie nach Ausfall der Steuereinheit 27 noch verfügbar sind. Die automatische Reaktion der Anordnung auf eine Störung der Energieleitung 1 erfolgt dann durch direkte Interaktion zwischen dem Lastsensor 43 und der Zuordnungseinheit 41 über die Leitung 54.

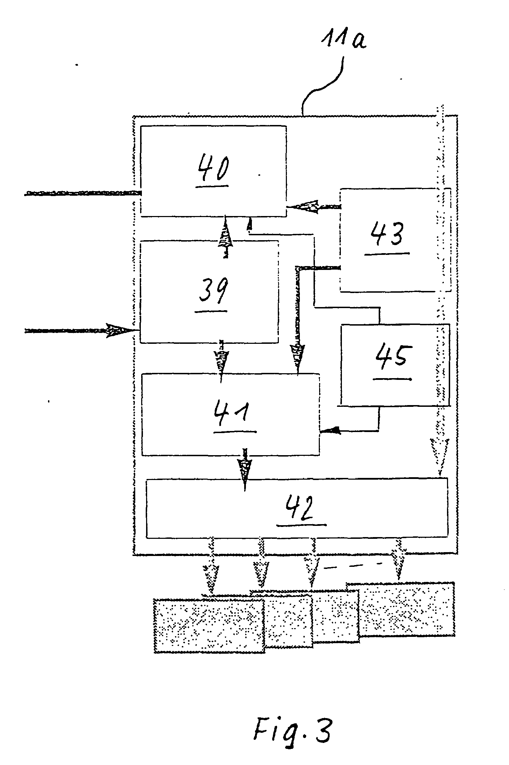

Figur 3 zeigt eine Ausgestaltung der Erfindung. Diese besteht darin, daß in die Zuordnungseinheiten 11 bis 13 jeweils eine Statuseinheit 45 integriert ist. Diese Lösung, die beispielhaft anhand einer Zuordnungseinheit 11a gezeigt ist, bietet gegenüber der Lösung nach Fig.2 mit einer externen Statuseinheit 44 den Vorteil, daß außer Störungen der Stromerzeugungseinrichtungen auch Störungen der Energieleitung 1 erfaßt und berücksichtigt werden können.

## Patentansprüche

1. Anordnung zur Energieverteilung in einem Flugzeug mit einer Energieleitung (1), bestehend aus mehreren einzelnen Versorgungssträngen (1a - 1 m), wobei im Zuge der Energieleitung (1) mindestens ein Verteiler (2, 3, 4) angeordnet ist, an den jeweils eine Verbrauchergruppe (8, 9, 10) über eine Stichleitung (5, 6, 7) und einen Leistungsschalter (42) angeschlossen ist, und wobei die Verbraucher jeder Verbrauchergruppe (8, 9, 10) gemäß einer vorgegebenen Konfiguration von Zuordnungen mit den Versorgungssträngen (1a - 1m) verbunden sind, **dadurch gekennzeichnet, dass**
- für jede Verbrauchergruppe (8, 9, 10) eine Zuordnungseinheit (11, 12, 13) vorgesehen ist, der mittels eines Datenbusses (33) eine Energiekontrolleinheit (27) vorgeschaltet ist,
- jede Zuordnungseinheit (11, 12, 13) eine Empfangsstufe (39) mit nachgeordneter Zuordnungssteuereinheit (41) zur Erzeugung von Schaltbefehlen für den Leistungsschalter (42) aufweist, an den die Verbraucher (14 - 26) einer jeden Verbrauchergruppe (8, 9, 10) angeschlossen sind,
- die zentrale Energiekontrolleinheit (27) eine Standardmatrix (35) mit abgespeicherten Zuordnungsbefehlen und eine nach geschaltete Prioritätsmatrix (34) mit einer abgespeicherten, die Verbraucher (14 - 26) nach ihrer Priorität ordnenden Liste aufweist, wobei die Prioritätsmatrix (34) von einer Energie Statuseinheit (44) über eine Leitung (29) Daten über den Zustand der Energieleitung (1) erhält und wobei der Prioritätsmatrix (34) ein Auswahlprozessor (36) zur rechnerischen Ermittlung der Belastbarkeit einzelner Stromerzeugerkreise und zur Festlegung entsprechender Grenzwerte zwecks Speisung einer Sendeeinheit (37) nachgeordnet ist, und dass
- die zentrale Energiekontrolleinheit (27) zur Verarbeitung von Störungsinformationen über den Datenbus (33) zur Übertragung von Steuerbefehlen mit jeder Zuordnungseinheit (11, 12, 13) derart zusammenwirkt, dass aufgrund der Störungsinformationen die vom Ausfall eines Versorgungsstranges (1a - 1m) betroffenen Verbraucher (14 - 26) gemäß ihrer durch die Prioritätsmatrix (34) vorgegebenen Priorität automatisch an noch intakte Versorgungsstränge angeschlossen werden.

2. Anordnung nach Anspruch 1, **dadurch gekennzeichnet, dass** jede Zuordnungseinheit (11, 12, 13) einen Lastsensor (43) zur Messung der individuellen Belastung eines jeden Versorgungsstranges der Stichleitungen (5, 6, 7) und zur Übermittlung der Messwerte einerseits über einen Lastmonitor (40) an eine Last-Rückmelde-Einheit (38) der Energiekontrolleinheit (27) und anderseits für eine direkte Interaktion über die Leitung (54) in die Zuordnungssteuereinheit (41) aufweist.

3. Anordnung nach Anspruch 1 oder 2, **dadurch gekennzeichnet, dass** an die Energiekontrolleinheit (27) zur manuellen Eingabe von Konfigurationsdaten eine Eingabeeinheit (30a) mit einer Tastatur (31) und einem Bildschirm (32) über eine Eingabeleitung (30) angeschlossen ist.

4. Anordnung nach Anspruch 1, 2 oder 3, **dadurch gekennzeichnet, dass** die Zuordnungseinheiten (11, 12, 13) jeweils eine Statuseinheit (45) aufweisen.

## Claims

1. Power distribution arrangement in an aircraft with a power line (1) comprising several individual power supply strands (1a - 1m), whereby at least one distributor (2, 3, 4) is connected to a point on the power line (1) to which a respective consumer group (8, 9, 10) is connected via a branch line (5, 6, 7) and a power switch (42), whereby the consumers of each consumer group (8, 9, 10) are connected to the supply strands (1a - 1m) on the basis of a pre-defined configuration of allocations,
**characterised in that**
- an allocation unit (11, 12, 13) is provided for each consumer group (8, 9, 10) which is connected to an upstream power control unit (27) by means of a data bus (33),
- each allocation unit (11, 12, 13) has a reception stage (39) with an allocation control unit (41) connected downstream for generating switching commands for the power switch (42) to which the consumers (14 - 26) of each consumer group (8, 9, 10) are connected,
- the central power control unit (27) has, a standard matrix (35) with stored allocation commands and, connected downstream, a priority matrix (34) with a stored list listing the consumers (14 - 26) by order of priority, and whereby the priority matrix (34) receives data about the status of the power line (1) via a line (29) from an energy status unit (44), whereby a selection processor (36) is connected downstream of the priority matrix (34) for determining by computation the load capacity of individual power generating circuits and for setting corresponding threshold values for the purpose of supplying a transmitter unit (37), and that
- in order to process information relating to failures, the central power control unit (27) co-operates with every allocation unit (11, 12, 13) via the data bus (33) to transmit control commands so that the consumers (14 - 26) affected by the failure of a power supply strand (1a
- 1m) are automatically connected to still intact supply strands in the order of their priority pre-defined by the priority matrix (34) on the basis of the information relating to failures.

2. Arrangement as claimed in claim 1, **characterised in that** each allocation unit (11, 12, 13) has a load sensor (43) for measuring the individual load of each supply strand of the branch lines (5, 6, 7) and for transmitting the measurement values via a load monitor (40) to a load check-back unit (38) of the power control unit (27) on the one hand and to permit a direct interaction via the line (54) to the allocation control unit (41) on the other hand.

3. Arrangement as claimed in claim 1 or 2, **characterised in that** an input unit (30a) with a keyboard (31) and a monitor (32) is connected to the power control unit (27) via an input line (30) for manually inputting configuration data.

4. Arrangement as claimed in claim 1, 2 or 3, **characterised in that** the allocation units (11, 12, 13) each have a status unit (45).

## Revendications

1. Système de distribution d'énergie dans un aéronef comprenant un conducteur d'énergie (1) constitué de plusieurs lignes individuelles d'alimentation (1a-1m) avec, sur le trajet du conducteur d'énergie (1) au moins un distributeur (2, 3, 4) auquel est raccordé chaque fois un groupe de consommateurs (8, 9, 10) par un câble de dérivation (5, 6, 7) et un commutateur de circuit de puissance (42), les consommateurs de chaque groupe de consommateurs (8, 9, 10) étant reliés aux lignes d'alimentation (1a-1m) selon une configuration prédéfinie des affectations,
**caractérisé en ce que** :
- pour chaque groupe de consommateurs (8, 9, 10), il est prévu une unité d'affectation (11, 12, 13) en amont de laquelle est branchée une unité de contrôle d'énergie (27) par l'intermédiaire d'un bus de données (33),
- chaque unité d'affectation (11, 12, 13) présente un étage de réception (29) en aval duquel est montée une unité de commande d'affectation (41) pour générer des ordres de commutation adressés au disjoncteur de puissance (42) auquel sont raccordés les consommateurs (14 à 26) de chaque groupe de consommateurs (8, 9, 10),
- l'unité centrale de contrôle d'énergie (27) présente une matrice standard (35) dans laquelle sont enregistrés des ordres d'affectation ainsi qu'une matrice de priorité (34) montée en aval et dans laquelle est enregistrée une liste selon laquelle les consommateurs (14 à 26) sont classés par ordre de priorité, la matrice de priorité (34) recevant d'une unité d'état d'énergie (44) par un conducteur (29) des données sur l'état du conducteur d'énergie (1), tandis qu'en aval de la matrice de priorité (34), se trouve un processeur de sélection (36) pour établir par le calcul la capacité de charge des circuits individuels de protection de courant, et pour déterminer des valeurs limites correspondantes en vue de les enregistrer dans une unité d'émission (37),
- l'unité centrale de contrôle d'énergie (27), afin de traiter des informations de désordre, coopère avec chaque unité d'affectation (11, 12, 13) par le bus de données (33) afin de transmettre des ordres de commande, de manière que sur la base des informations de désordre, les utilisateurs (14 à 26) concernés par la défaillance d'une ligne d'alimentation (1a-1m) soient raccordés automatiquement à des lignes d'alimentation encore intactes selon leur priorité prédéfinie par la matrice de priorité (34).

2. Système selon la revendication 1, **caractérisé en ce que** chaque unité d'affectation (11, 12, 13) présente un capteur de charge (43) pour mesurer la charge individuelle de chaque ligne d'alimentation des câbles de dérivation (5, 6, 7) et pour transmettre les valeurs de mesure, d'une part à une unité de réception de charge (38) de l'unité de contrôle d'énergie (27) par un moniteur de charge (40), et d'autre part pour une interaction directe dans l'unité de commande d'affectation (41) par le conducteur (54).

3. Système selon la revendication 1 ou 2, **caractérisé en ce que** pour permettre l'entrée manuelle de données de configuration, à l'unité de contrôle d'énergie (27) est raccordée par un conducteur d'entrée (30) une unité d'entrée (30a) équipée d'un clavier (31) et d'un écran (32).

4. Système selon une des revendications précédentes, **caractérisé en ce que** les unités d'affectation (11, 12, 13) comportent chacune une unité d'état (45).
